(19) Europäisches Patentamt
European Patent Office
Office européen des brevets

(11) **EP 1 306 691 A2**

(12) **EUROPÄISCHE PATENTANMELDUNG**

(43) Veröffentlichungstag:
02.05.2003 Patentblatt 2003/18

(51) Int Cl.⁷: **G01T 1/204**

(21) Anmeldenummer: **02020999.5**

(22) Anmeldetag: **20.09.2002**

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: **23.10.2001 DE 10152292**

(71) Anmelder: **FORSCHUNGSZENTRUM JÜLICH
GMBH**
**52425 Jülich (DE)**

(72) Erfinder:
• **Wenzel, Ulrich, Dr.**
**52428 Jülich (DE)**
• **Ullrich, Werner**
**52428 Jülich (DE)**
• **Ritz, Gerhard**
**52428 Jülich (DE)**
• **Steffens, Walter**
**52428 Jülich (DE)**
• **Wetzler, Herbert**
**6442 AX Brunssum (NL)**

(54) **Messzelle und Verfahren zur Messung der Beta-Aktivität einer radioaktiven Flüssigkeit**

(57)   Die Erfindung betrifft eine Meßzelle zur Messung der β-Aktivität einer radioaktiven Flüssigkeit umfassend eine Meßzelle mit einem Einlaß und einem Auslaß, sowie einen Szintillator, und wenigstens eine Abschirmplatte, die zwischen der radioaktiven Flüssigkeit und dem Szintillator angeordnet ist. Damit ist diese Meßzelle besonders geeignet, Messungen für hohe Aktivitäten von β-Strahlern mit niedriger Energie (< 0,5 MeV) durchzuführen. Optional können damit aber alle β-Strahlen erfaßt werden.

Vorteilhaft ist die Durchflußmeßzelle derart ausgebildet, so daß die Abschirmplatte und/oder der Szitillator auf einfache Weise in der Durchflußzelle gewechselt werden können. Damit kann die Durchflußmeßzelle leicht an das jeweilige Meßproblem angepaßt werden.

Figur 1

**Beschreibung**

Die Erfindung betrifft eine Meßzelle sowie ein Verfahren zur Messung von Aktivitäten einer radioaktiven Flüssigkeit, insbesondere von hohen energetischen β-Aktivitäten.

Stand der Technik

Durchflußdetektoren zur Messung von β-Aktivitäten in einer Lösung sind aus der Literatur bekannt. Sie basieren hauptsächlich auf der Erfassung der Strahlung mit Hilfe der Szintillationstechnik. Eine Methode ist es, die radioaktive Meßlösung zunächst mit einem Flüssigszintillator zu mischen, sie durch eine Durchflußzelle zu leiten, und sie dort mit einem Detektor zu vermessen.

Eine weitere Methode läßt die radioaktive Lösung in einer Durchflußzelle an fixiertem Szintillatormaterial entlang strömen. Dazu ist aus DE 196 13 971 C2 eine Durchflusszintillationsmeßzelle bekannt, die einen durchsichtigen und an seiner Innenwand Szintillator aufweisenden Schlauch enthält. Beim Durchströmen der zu vermessenden radioaktiven Lösung durch den Schlauch werden Lichtblitze erzeugt, die außerhalb des Schlauchs von einem Detektor gemessen werden. Aus DE 199 08 589 C1 ist ebenfalls eine Meßzelle zur Messung von Radioaktivitäten bekannt, bei der die Meßlösung durch ein Schlauchbündel mit fixiertem Szintillatormaterial geleitet wird. Dabei kann durch geeignete Wahl der Schlauchgeometrie eine hohe Selektivität für α-Strahlung erzielt werden.

Diese Durchflußdetektoren sind sehr empfindlich ausgestaltet und weisen eine hohe Effizienz auf. Messungen hoher Aktivitäten, wie sie beispielsweise bei der Produktion von Radionukliden notwendig wären, sind ohne aufwendige Probenahme nicht möglich.

Weiterhin weist die Methode, bei der Flüssigszintillator eingesetzt wird, den Nachteil auf, daß die Messlösung damit verunreinigt wird, und der Flüssigszintillator als Reagenz für eine weiter Messung nicht mehr zur Verfügung steht. Andererseits verursachen die Methoden, die einen fixierten Szintillator in dem Detektor aufweisen, nachweislich hohe Drücke in den Schläuchen, wodurch ein Sicherheitsproblem entsteht.

Aufgabe und Lösung

Die Aufgabe der Erfindung ist es, ein Verfahren zur Messung der β-Aktivität einer radioaktiven Flüssigkeit zu schaffen. Eine weitere Aufgabe der Erfindung ist es, eine entsprechende Vorrichtung zur Messung der β-Aktivität einer radioaktiven Flüssigkeit zur Verfügung zu stellen.

Gegenstand der Erfindung

Die erfindungsgemässe Meßzelle zur Messung der β-Aktivität einer radioaktiven Flüssigkeit umfasst einen Probenraum mit einem Einlaß und einem Auslaß, sowie einen Szintillator, der β-Strahlung zu detektieren vermag. Außerdem ist wenigstens eine Abschirmplatte zwischen dem Probenraum und dem Szintillator angeordnet. Die Abschirmplatte bewirkt eine Abschirmung hoher Aktivitäten, insbesondere β-Aktivitäten, so daß die von einer zu vermessenden radioaktiven Flüssigkeit ausgehende und beim Szintillator abgeschwächt auftreffende Strahlung vorteilhaft mit den herkömmlichen empfindlichen Detektoren erfaßt werden kann.

Die Abschirmplatte ist insbesondere aus einem durchsichtigen oder durchscheinenden Material, um Koinzidenzmessungen zu ermöglichen. Vorteilhaft ist sie dazu aus Atomen mit einer niedrigen Ordnungszahl aufgebaut, beispielsweise aus C, H, O und/oder N, um eine Bremsstrahlung weitgehend zu vermeiden. Gegenüber der zu vermessenden radioaktiven Flüssigkeit ist die Abschirmplatte inert. Als geeignete Materialien für eine Abschirmplatte haben sich z. B. Polypropylen, Polyethylen und Plexiglas herausgestellt.

Durch die Wahl des Materials und der Schichtdicke der eingesetzten Abschirmplatte kann die Abschirmung, d. h. die Abschwächung der Aktivität vorteilhaft der jeweils zu vermessenden Flüssigkeit angepaßt werden. Dazu ist die Meßzelle insbesondere derart aufgebaut, daß ein Wechsel der Abschirmplatte problemlos erfolgen kann. Dies ist beispielsweise in einer Anordnung der Fall, bei der die eigentliche Meßzelle, bzw. der Probenraum, kreisförmig ausgestaltet ist. Durch einen Aufbau mit Gewindebohrung lassen sich auf diese Weise sowohl der Szintillator- und eine entsprechende Szintillatorhalterung, als auch die Abschirmplatte aus der Meßzelle leicht ein und ausbauen. Eine Dichtung sorgt für einen abgeschlossenen Probenraum. Dies hat zusätzlich den Vorteil, daß der Szintillator nicht mit der zu vermessenden Lösung in Kontakt kommt. Bei einer kreisförmigen Ausgestaltung der Meßzelle bietet sich auch eine doppelte Detektion auf beiden Seiten des Probenraumes an. Dazu ist ein spiegelbildlicher Aufbau in Form eines ersten Szintillators, einer ersten Abschirmplatte, des Probenraumes, einer zweiten Abschirmplatte und eines zweiten Szintillators denkbar. Für die eigentliche Meßzelle hat sich Edelstahl als geeignetes Material bewährt. Dichtungen aus Teflon und Szintillatorhalterungen aus Plexiglas genügen den Anforderungen der Meßzelle vollständig.

Handelsübliche Szintillatoren bestehen beispielsweise aus Meltilex™.

Mit der erfindungsgemäßen Meßzelle ist je nach Art und Schichtdicke der Abschirmplatte eine Abschwächung der β-Aktivität von 0 bis 100 %, insbesondere von mehr als 90 % möglich. Durch einen geeigneten Aufbau der erfindungsgemäßen Meßzelle wird vorteilhaft auch ein Einbau in schon im Handel erhältliche Radioaktivitätsmonitore ermöglicht.

Bei dem erfindungsgemäßen Verfahren zur Messung von β-Aktivitäten einer radioaktiven Flüssigkeit wird diese zunächst in den Probenraum einer vorgenannten Meßvorrichtung eingespeist. Vorteilhaft wird die Flüssigkeit dabei durch einen Einlaßstutzen in den entsprechenden Turbulenzkanal eingebracht und durch Düsen in den Probenraum gedrückt. Dabei wird die Lösung im Innenraum verwirbelt, so daß bei Konzentrationsänderungen in der Speiselösung eine schnelle Homogenisierung im Innenraum der Meßzelle stattfindet. Die Lösung kann den Probenraum vorteilhaft auch wieder durch entsprechende Bohrungen auf der gegenüberliegenden Seite verlassen. Sie gelangt dann in den zweiten Turbulenzkanal und wird durch den Auslaß abgeleitet. Die radioaktive Strahlung dringt zunächst durch wenigstens eine Abschirmplatte und wird dabei entsprechend der Dicke der Platte, dem Plattenmaterial und der Reichweite der Teilchen abgeschwächt. Erst dann erreichen die Teilchen den Szintillator und erzeugen dort Lichtblitze, die dann mit Hilfe von z. B. Sekundärelektronenvervielfältigern verstärkt und elektronisch gemessen werden.

Spezieller Beschreibungsteil

Nachfolgend wird der Gegenstand der Erfindung anhand von zwei Figuren und einem Ausführungsbeispiel näher erläutert, ohne daß der Gegenstand der Erfindung dadurch beschränkt wird.

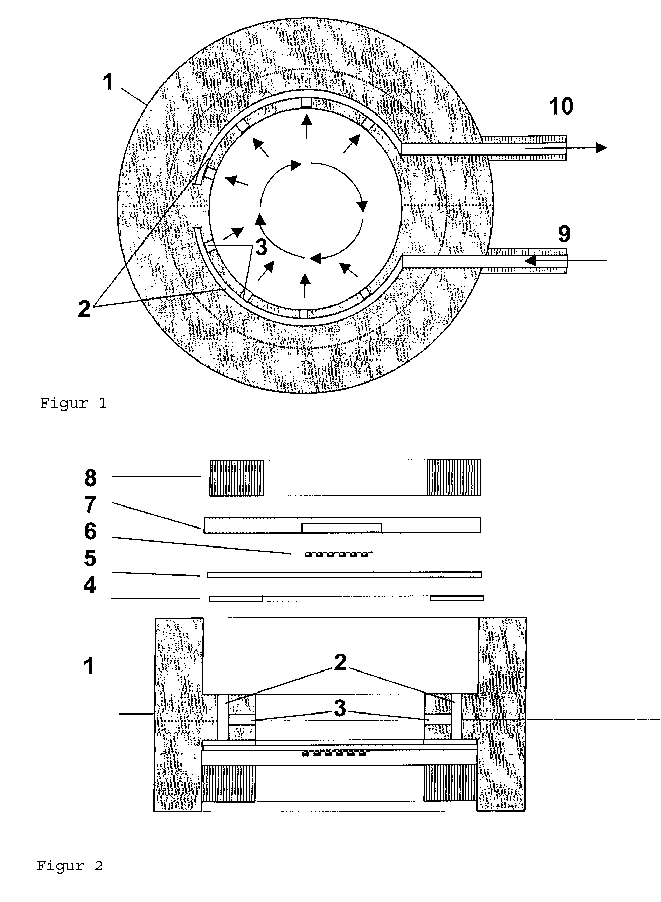

Die Figur 1 zeigt ein Ausführungsbeispiel der erfindungsgemäßen Meßzelle im horizontalen Querschnitt.

Die Figur 2 zeigt dasselbe Ausführungsbeispiel im vertikalen Querschnitt.

Das Ausführungsbeispiel zeigt eine erfindungsgemäße Durchflußmeßzelle, bei der zwei Abschirmplatten (5) zwischen den Szintillatoren (6) und der zu vermessenden radioaktiven Flüssigkeit für eine definierte Schwächung der β-Strahlung sorgen. Diese Schwächung hängt von der Energie des β-Strahlers sowie von der Schichtdicke und dem Material der Abschirmplatten (5) ab. Die Schwächung von β-Strahlung in Materie wird durch die Vorrichtung bei der Messung hoher β-Aktivitäten ausgenutzt. Die Durchflußmeßzelle besteht aus kreisrunden Rahmen (1), an den zwei Rohrstutzen (9, 10) angebracht sind. Im vorliegenden Beispiel sind die vertikalen Schenkel des Rahmens (1) an der Innenseite mit Gewinden versehen. Der horizontale Schenkel des Rahmens hat zwei gegenüberliegende, nicht miteinander verbundene Kanäle (Turbulenzkanäle) (2), die aus Fertigungsgründen durch den Schenkel durchgefräst werden können. Die Kanäle (2) sind jeweils mit einem der Rohrstutzen (9, 10) verbunden. Vom Innenraum des Rahmens (1) führen als Düsen (3) fungierende Bohrungen durch die senkrechte Wand des horizontalen Schenkels zu den Kanälen (2). Die ausgefrästen Kanäle (2) werden durch zwei Dichtringe (4) oben und unten abgedichtet. Auf den Dichtungen (4) liegen jeweils eine Abschirmplatte (5). Auf der Abschirmplatte (5) liegt die Szintillatorhalterung (7) aus durchsichtigem Material (z. B. Plexiglas), auf deren Unterseite (der Abschirmplatte zugewandten Seite) der Feststoffszintillator (6) in einer geeigneten Vertiefung angebracht ist. Ein Anpressring (8) drückt Szintillatorhalterung (7) und Abschirmplatte (5) gegen die Dichtung (4). Im vorliegenden Ausführungsbeispiel werden die Anpressringe (8) in den Rahmen eingeschraubt und dichten so den Innenraum der Meßzelle ab.

Die Maße der Meßzelle sind so gestaltet, daß sie vorteilhaft problemlos sowohl in den Radioaktivitätsmonitor LB 508 C der Fa. BERTHOLD; Bad Wildbach, Deutschland, als auch in den entsprechenden Monitor Radiomatic 500 TR der Fa Canberra Packard, Meriden, USA, ohne Veränderung der entsprechenden Geräte eingebracht werden können.

Im Meßbetrieb wird die radioaktive Lösung durch den Einlaßstutzen (9) in den entsprechenden Turbulenzkanal (2) eingespeist und durch die Düsen (3) in den Meßkammerinnenraum gedrückt. Dabei wird die Lösung im Innenraum verwirbelt, so daß bei Konzentrationsänderungen in der zu vermessenden radioaktiven Flüssigkeit eine schnelle Homogenisierung im Innenraum der Meßzelle stattfindet. Die Lösung verläßt die Zelle durch die gegenüberliegenden Bohrungen (3), gelangt in den zweiten Turbulenzkanal (2) und verläßt die Zelle durch den Auslaß (10). Die radioaktive Strahlung dringt durch die Abschirmplatten (5) und wird dabei entsprechend der Dicke der Platten, dem Plattenmaterial und der Reichweite der Teilchen geschwächt. Teilchen, die den Szintillator (6) erreichen, erzeugen Lichtblitze, die dann mit Hilfe von z. B. Sekundärelektronenvervielfältigern verstärkt und elektronisch gemessen werden.

Grundsätzlich lassen sich mit der Meßzelle alle β-Strahlen erfassen, wobei die Lichtausbeute von der Energie der β-Teilchen abhängig ist. α-Strahlung wird von den Abschirmplatten (5) bereits nach ca. 50 μm total absorbiert. γ-Strahlung stört die Messung, da der Szintillator auch auf diese Strahlung anspricht. β-Strahlung höherer Energie (> 0,5 MeV) erzeugt in den Abschirmplatten (5) stärkere Bremsstrahlung, die ebenfalls vom Szintillator (6) erfaßt wird. Deshalb wird die Anwendung der Vorrichtung vorteilhaft auf reine β-Strahler niederer Energie begrenzt, wenn hohe spezifische Aktivitäten gemessen werden sollen.

Die Ausbeute an Lichtblitzen kann mit der erfindungsgemäßen Meßzelle auf dreierlei Art beeinflußt werden:

1) Fläche des Szintillators

Der im Ausführungsbeispiel verwendete Plastikszintillator MELTILEX™ ist in Folien mit den Massen 0,5 x 92 x 242 mm lieferbar. Aus diesen Folien werden kreisrunde Plättchen mit dem Durchmesser $\phi_{min}$ = 2 mm $\leq \phi \leq \phi_{max}$ = 34 mm gestanzt. Diese Plättchen werden dann in die vorgesehenen Aussparungen der Szintillatorhalterungen eingefügt und bei ca. 60 °C geschmolzen. Nach dem Abkühlen sind die Plättchen fest mit der Halterung verbunden. Die Szintillatorfläche F bewegt sich in den Grenzen 0,03 cm$^2$ $\leq$ F $\leq$ 9 cm$^2$ und die Ausbeute an Lichtblitzen ist der Szintillatorfläche proportional.

2) Dicke der Abschirmplatte

β-Strahlung wird durch Materie absorbiert. Der Grad der Absorption hängt von der Art der Materie, ihrer Dichte $\rho$, ihrer Schichtdicke d und der Strahlungsenergie ab. Die maximale Schichtdicke der Abschirmplatte wird beispielsweise durch die geometrische Gestaltung der verwendeten Meßkammer des Radioaktivitätsmonitors (z. B. LB 508 C/BERTHOLD oder Radiomatik 500 TR/PACKARD) vorgegeben. Insgesamt kann die Schichtdicke in den Grenzen 0,05 mm $\leq$ d $\leq$ 5,5 mm variieren. Bei Schichten > 2 mm lassen sich Szintillatorhalterung und Abschirmplatte vorteilhaft in einem Werkstück verbinden. Bei C$^{14}$- Strahlern schwächt eine 0,2 mm dicke Polypropylenfolie ( $\rho$ = 1,3 g/cm$^3$) die Strahlung (E$_{mean}$ ~ 50 keV) um den Faktor 100, bei Pm$^{147}$ (E$_{mean}$ ~ 70 keV) verursacht eine 0,3 mm dicke Platte desselben Materials die gleiche Schwächung.

3) Art des Materials

Durch die Wahl des Materials für die Abschirmplatten kann die Absorption der β-Strahlung ebenfalls beeinflußt werden. Polypropylenfolien unterschiedlicher Dichte und somit jedes gewünschte Flächengewicht für die Abschirmfolien bzw. -platten stehen zur Verfügung.

Durch Kombination und Variation dieser Parameter kann die Zelle von einem Fachmann praktisch an jedes Problem bei der Messung von β-Strahlen angepaßt werden. Zusätzlich arbeitet die Zelle völlig drucklos und erfüllt dadurch leichter einschlägige Sicherheitsauflagen. Zudem ist Polypropylen gegenüber anorganischen und organischen Lösungsmitteln unempfindlich.

Bei Koinzidenzmessungen, wie sie mit den als Ausführungsbeispiel angegebenen Geräten durchgeführt werden, können auch durchsichtige Folien aus anderem Material (z. B. Plexiglas, Polyethylen, Myla™) eingesetzt werden. Bei Messungen mit nur einem Multiplier kann man auch Metallfolien mit einem entsprechenden Flächengewicht als Abschirmplatten einsetzten.

Die flächenspezifische Effizienz η ist für die Meßzelle folgendermaßen definiert:

$$\eta[\text{ml/cm}^2] = \frac{\text{Zählrate [s}^{-1}]}{\text{spez. Aktivität [Bq/ml] x Szintillatorfläche [cm}^2]}$$

η ist energieabhängig und muß für jeden einzelnen β-Strahler bestimmt werden. Für die untersuchten Nuklide ergeben sich folgende η-Werte:

$$\eta_{\text{C-14}} = 0{,}0019 \text{ ml/cm}^2$$

$$\eta_{\text{Pm-147}} = 0{,}0043 \text{ ml/cm}^2$$

Die Linearität der Sekundärelektronenvervielfältiger ist laut Werksangabe bis zu einer Impulsrate von 20 000 ips (Impulse/Sekunde) gewährleistet. Daraus ergeben sich für den ungeschützten Detektor bei der minimalen Szintillatorfläche von 0.03 cm$^2$ maximale, meßbare spezifische Aktivitäten von:

$$A_{\text{max C-14}} = 3{,}5 \; 10^8 \text{ Bq/ml}$$

$$A_{\text{max Pm-147}} = 1{,}6 \; 10^8 \text{ Bq/ml}$$

Durch geeignete Abschirmfolien mit 90 % des maximalen Flächengewichts lassen sich diese Aktivitäten um den Faktor 500 steigern:

$$A_{max\ C\text{-}14} = 1,75\ 10^{11}\ Bq/ml$$

$$A_{max\ Pm\text{-}147} = 0,8\ 10^{11}\ Bq/ml$$

Die Vorrichtung kann vorteilhaft auch ohne bauliche Veränderung für die Messung niedriger spezifischer $\beta$-Aktivitäten hoher Energie verwendet werden. Die Abschirmplatte dient dann nur als Kontaminationsschutz und sollte ein möglichst kleines Flächengewicht besitzen (Polypropylenfolie, 0,005 cm stark, Flächengewicht 6,5 mg/cm$^2$), während die Szintillatorfläche den Maximalwert erreichen sollte (9 cm$^2$).

Für Y-90 mit einer Energie von 2,25 MeV wurde mit der Vorrichtung eine flächenspezifische Effizienz

$$\eta_{Y\text{-}90} = 0,35\ ml/cm^2$$

bestimmt. Mit einer Szintillatorfläche von 9 cm$^2$ beträgt die Erfassungsgrenze der Vorrichtung für Y-90 4 Bq/ml.

**Patentansprüche**

1. Meßzelle zur Messung der $\beta$-Aktivität einer radioaktiven Flüssigkeit umfassend einen Probenraum mit einem Einlaß und einem Auslaß, sowie einen Szintillator, **gekennzeichnet durch** wenigstens eine Abschirmplatte, die zwischen dem Probenraum und dem Szintillator angeordnet ist.

2. Meßzelle nach vorhergehendem Anspruch 1, mit einer effektiven Szintillatorfläche von 0,01 bis 10 cm$^2$, insbesondere von 0,03 bis 9 cm$^2$.

3. Meßzelle nach einem der vorhergehenden Ansprüche 1 bis 2, mit einer Schichtdicke der Abschirmplatte zwischen 0,01 und 10 mm, insbesondere zwischen 0,05 und 6 mm.

4. Meßzelle nach einem der vorhergehenden Ansprüche 1 bis 3, mit einer Abschirmplatte aus durchsichtigem oder durchscheinenden Material, das aus Atomen niedriger Ordnungszahl besteht, insbesondere aus C, H, O, und/ oder N.

5. Meßzelle nach einem der vorhergehenden Ansprüche 1 bis 4, mit einer Abschirmplatte aus Plexiglas, Polyethylen oder Polypropylen.

6. Meßzelle nach einem der vorhergehenden Ansprüche 1 bis 5, bei der oberhalb und unterhalb des Probenraumes jeweils eine Abschirmplatte und ein Szintillator angeordnet sind.

7. Meßzelle nach einem der vorhergehenden Ansprüche 1 bis 6, bei der der Probenraum, der bzw. die Szintillatoren und die Abschirmplatte bzw. die Abschirmplatten kreisförmig ausgestaltet sind.

8. Meßzelle nach einem der vorhergehenden Ansprüche 1 bis 7, bei der wenigstens eine Düse im Einlaßbereich zur Verwirbelung der zu vermessenden Lösung innerhalb des Proberaums angeordnet ist.

9. Meßzelle nach einem der Ansprüche 1 bis 8, bei der alle Teile außer dem Rahmen austauschbar sind.

10. Verwendung einer Meßzelle nach einem der Ansprüche 1 bis 9 zur Messung von hohen $\beta$-Aktivitäten niedriger Energie.

11. Verwendung einer Meßzelle nach einem der Ansprüche 1 bis 9 zur Messung von niedrigen $\beta$-Aktivitäten hoher Energien

12. Verfahren zur Messung von hohen $\beta$-Aktivitäten einer radioaktiven Flüssigkeit mit einer Meßzelle gemäß einem der Ansprüche 1 bis 9 mit den Schritten:

- die radioaktive Flüssigkeit wird in den Probenraum der Meßzelle geleitet,

- die von der radioaktiven Flüssigkeit ausgehende β-Strahlung wird durch wenigstens eine Abschirmplatte zumindest teilweise absorbiert,
- die abgeschwächte β-Strahlung fällt auf einen Szintillator und wird dort in Lichtblitze umgewandelt,
- aus den von einem Detektor erfaßten Lichtblitzen und der Art der Abschirmung wird die β-Aktivität der Flüssigkeit ermittelt.

Figur 1

Figur 2